# EUROPÄISCHE PATENTANMELDUNG

(11) **EP 1 657 802 A1**
(43) Veröffentlichungstag der Anmeldung: **17.05.2006**
(21) Anmeldenummer: 05022838.6
(22) Anmeldetag: 20.10.2005
(51) Int. Cl.: H02K 3/28, H02K 29/03

(54) **Elektrische Drehfeldmaschine und Primärteil**

(30) Priorität: 16.11.2004 DE 102004055317
(71) Anmelder: Bosch Rexroth AG, 70184 Stuttgart (DE)
(72) Erfinder: Gröning, Ingolf, 97816 Lohr am Main (DE); Kaehler, Christian, 97846 Partenstein (DE)

(57) **Zusammenfassung**

Die Erfindung betrifft ein Primärteil einer elektrischen Drehfeldmaschine, insbesondere einen Synchron- oder Linearmotor, mit einer Mehrzahl von Modulen (20), die jeweils in einer Reihe angeordnete Zähne (25) mit wenigstens teilweise umlaufenden Nuten (40) aufweisen, wobei in der Nut (40) eines jeden Zahns (25) eine Spule (30) um diesen Zahn (25) gewickelt ist und die Spulen (30) eines einzelnen Moduls (20) an eine einzelne Phase eines Drehstromnetzes angeschlossen sind, und die Anzahl der Module (20) im Primärteil (10) gleich der Anzahl der Stromphasen oder ein ganzzahliges Vielfaches davon ist, wobei ein einzelnes Modul (20) eine ungerade Anzahl von Zähnen (25), jedoch wenigstens drei Zähne (25), umfasst und wobei einander direkt benachbarte Zähne (25) eines einzelnen Moduls (20) Spulen (30) mit einer gegensinnigen Wicklungsrichtung aufweisen, die an den Zähnen (25) eine entgegengesetzte Magnetfeldpolarität hervorruft.

Ferner betrifft die Erfindung eine elektrische Drehfeldmaschine, insbesondere einen Synchron- oder Linearmotor, mit einem Primärteil (10) und mit einem mit dem Primärteil (10) über einen Luftspalt zusammenwirkenden Sekundärteil (100), der als Läufermagneten (110) bevorzugt Permanentmagneten aufweist.

## Beschreibung

Die Erfindung betrifft ein Primärteil einer elektrischen Drehfeldmaschine und eine elektrische Drehfeldmaschiné, insbesondere einen Synchron- oder Linearmotor für Maschinen, bei welchen ein hoher Gleichlauf gefragt ist.

Solche Motoren finden zum Beispiel in Druck- und Schleifmaschinen Anwendung. Ferner sind bei Servoanwendungen hohe Gleichlaufeigenschaften notwendig. Zum Erreichen eines holien Gleichlaufs, um z. B. für Servoanwendungen exakt. positionieren zu können, ist es insbesondere notwendig, dass der Motor eine geringe Drehmomentwelligkeit aufweist. Idealerweise sollte ein Elektromotor zu jedem Zeitpunkt ein konstantes Drehmoment liefern. Die Drehmomentwelligkeit ist ein Maß dafür, in wieweit das Drehmoment des Motors zu einem Zeitpunkt t vom mittleren Drehmoment des Motors abweicht. Meist wird die Drehmomentwelligkeit in Bezug auf das mittlere, Drehmoment des Elektromotors in Abhängigkeit vom Rotorwinkel angegeben. Weist ein Motor eine zu hohe Drehmomentwelligkeit auf, so ist es nicht mehr möglich, eine gewünschte Rotorstellung exakt anzusteuern. Ferner sollte ein Elektromotor eine geringe Streuinduktivität und kein hohes Sättigungsverhalten aufweisen. Eine geringe Streuinduktivität lässt sich insbesondere durch einen möglichst großen Abstand der Zähne im Stator realisieren. Dies resultiert daher, dass das Durchflutungsverhalten von der Motorgeometrie und der Anordnung der Spulen abhängig ist. Aus einer geringen Streuinduktivität resultiert ein geringes Sättigungsverhalten des Motors, was diesem wiederum eine hohe Maximaldrehzahl und somit im Bezug auf die Drehzahl ein breites Anwendungsgebiet eröffnet.

Elektrische Maschinen weisen meist (mindestens) ein ruhendes und ein bewegliches Hauptelement auf. Bei rotierenden Maschinen sind dies Ständer und Läufer, die oft auch Stator bzw. Rotor genannt werden. Bei linearen Maschinen existiert keine solche Aufteilung in ein ruhendes und ein bewegtes Hauptelement, daher werden hierfür die auch für rotierende Maschinen durchaus gebräuchlichen Bezeichnungen Primärteil und Sekundärteil verwendet. Hierbei ist der Primärteil das jenige Element, welches mit einem elektrischen Drehfeld beaufschlagt ist. Der Sekundärteil hingegen ist dasjenige Element, welches elektrisch oder permanentmagnetisch erregt ist. Im Folgenden soll die Bezeichnung Primärteil ebenso den Ständer bzw. Stator sowie die Bezeichnung Sekundärteil den Läufer bzw. Rotor mit umfassen. In der Regel sind diese Hauptelemente aus lamelliertem Eisen aufgebaut und tragen Wicklungen aus isolierten Kupferleitern. Die Drehmomentbildung erfolgt elektromagnetisch durch die Kraftwirkung auf stromdurchflossene Leiter im magnetischen Feld. Maßgebend hierfür sind der Strombelag der Wicklung, die den Laststrom führt, und die magnetische Flussdichte in einem Luftspalt zwischen Primärteil und Sekundärteil. Solche Maschinen sind z. B. Asynchron- und Synchronmaschinen. Insbesondere soll im Folgenden auf Synchronmaschinen und vor allem auf Synchronmotoren eingegangen werden. Bei den Synchronmotoren läuft das elektrisch erzeugte Erregerfeld im Primärteil drehzahlabhängig um. Im Sekundärteil sind meist Permanentmagneten (jedoch auch Gleichstrommagneten) und im Primärteil zur Erzeugung des Rotationsfelds sind Drehstromwicklungen angebracht. Die Aufteilung des den Primärteilwicklungen zulaufenden Stroms wird in Abhängigkeit des Sekundärteilstellungswinkels vorgenommen. Sekundärteil und Drehfeld des Synchronmotors weisen die gleiche Drehzahl auf .

Aus der DE 101 19 642 A1 ist ein Stator für eine elektrische Drehfeldmaschine, insbesondere für eine Synchronmaschine, bekannt, wobei die Zähne des Stators an einem Joch lösbar befestigt sind, was es ermöglicht die Zähne außerhalb des Stators zu bewickeln und diese anschließend im Stator zu montieren, wobei im montierten Zustand des Motors einander direkt benachbarte Zähne eine unterschiedliche Wicklungsrichtung aufweisen. Ferner umfasst der Stator unbewickelte Hilfszähne. Diese Konfiguration ermöglicht eine einfache Montage der Spulen, jedoch weist der Synchronmotor eine hohe Streuinduktivität und somit auch ein hohes Sättigungsverhalten auf.

Die US 5 642 013 lehrt einen Synchronmotor, dessen Nutbreite und Zahnabstand zur Reduzierung der Drehmomentwelligkeit derart aufeinander abgestimmt sind, dass sich hierbei vorzugsweise ein Verhältnis von 0,40 bis 0,55 einstellt. Dieses Verhältnis ist nur ohne Polschuhe erzielbar, was dem Synchronmotor eine hohe Streuinduktivität und somit auch ein hohes Sättigungsverhalten verleiht.

Die US 4 752 707 offenbart einen Stator einer Synchronmaschine, wobei die Spulen um die Zähne derart orientiert sind und im Betrieb des Motors derart bestromt werden, dass an jeweils einander diametral gegenüberliegenden Zähnen eine unterschiedliche Magnetfeldpolarität entsteht und jeweils drei benachbarte Zähne einen Pol des Ständers bilden, was dem Motor eine hohe Drehmomentwelligkeit verleiht. Ein Bewickeln des Stators findet derart statt, dass. immer drei Zähne gleichzeitig mittels einer Wicklungsgabel bewickelt werden.

Die EP 1 315 274 A1 lehrt zur Verminderung der Drehmomentwelligkeit eines Synchronmotors einen Ständer, dessen Zähne oder Zahnmodule (Mehrzahl von einander direkt benachbarten Zähnen) derart mit Spulen umwickelt sind, das einander direkt benachbarte Elemente bei Bestromung eine unterschiedliche Magnetfeldpolarität aufweisen, wobei die Anzahl der Zähne bzw. die Anzahl der Module genau die doppelte Anzahl der für den Motor verwendeten Stromphasen ist. Nachteilig bei diesem Motor ist sein hohes Sättigungsverhalten. Ferner lehrt diese Schrift eine entsprechende Wicklungsvorschrift für die Zähne bzw.

Zahnmodule und ein bevorzugtes Verhältnis der Polteilung zur Nutteilung.

Aufgabe der Erfindung ist es daher eine elektrische Drehfeldmaschine zur Verfügung zu stellen, die für oben genannte Einsatzgebiete anwendbar ist und eine hohe Linearität (Drehmomentkurve über Strom), eine geringe Streuinduktivität (geringes Sättigungsverhalten und hohe Maximaldrehzahl) und insbesondere eine geringe Drehmomentwelligkeit aufweist. Ferner sollte der Motor eine hohe Kraftdichte (geringes Bauvolumen), geringe Kosten und ein geringes Gewicht aufweisen.

Diese Aufgabe wird mittels einer elektrischen Drehfeldmaschine gelöst, deren Verhältnis von Zahn- zu Nutteilung unter Berücksichtigung von Wicklungsausführungen optimiert ist. Erfindungsgömäß weist ein Primärteil der elektrischen Drehfeldmaschine, insbesondere ein Synchron- oder Linearmotor, eine Mehrzahl von gezahnten Modulen auf, wobei ein Modul wenigstens drei Zähne und jeweils eine um einen Zahn umlaufende Nut umfasst, in welcher eine Spule um den entsprechenden Zahn gewickelt ist, wobei die Spulen eines einzigen Moduls an eine einzige Phase eines Drehstromnetzes angeschlossen sind. Bei dem erfindungsgemäßen Primärteil ist die Anzahl der Module gleich der Anzahl der Stromphasen oder ein ganzzahliges Vielfaches davon. Die Wicklungsausführung eines einzigen Moduls ist derart ausgeführt, dass bei Stromfluss durch die Spulen eines einzigen Moduls einander direkt benachbarte Spulen ein entgegengesetzt polarisiertes Magnetfeld erzeugen.

In einer bevorzugten Ausführungsform sind hierbei bei einander direkt benachbarten Zähnen zweier direkt benachbarter Module die Wicklungen um diese beiden Zähne in einem gleichen Umlaufsinn ausgeführt.

Mittels diesen Konfigurationen des Primärteils erhält man aufgrund der Wicklungsausführung der Module Oberwellen im Drehfeld, die erst bei einer hohen Ordnungszahl, (und damit bei einer kleinen Amplitude) eine kongruente Oberwelle eines Sekundärteilfeldes vorfinden, was die Drehmomentschwankungen des Motors deutlich reduziert. Zusätzlich sind die Wicklungsfaktoren der Oberwellen im Verhältnis klein und der Wicklungsfaktor der Grundwelle sehr hoch. Dies führt insgesamt zu einem hohen Drehmoment bei geringer Drehmomentwelligkeit. Ferner lässt sich durch eine Anpassung der Magnetbreite (Polbedeckung) des Sekundärteils die Rastkraft minimieren.

Eine bevorzugte Wicklungsausführung des Primärteils ist: P1, -P1, -P1, P1, P1, -P1; ...; Pm, -Pm, -Pm, Pm, Pm, -Pm oder ein ganzzahliges Vielfaches davon. Hierbei gibt m die Anzahl der Stromphasen an, wobei insbesondere ein dreiphäsiger Drehstrom bevorzugt ist. Bei einer erfindungsgemäßen Ausführungsform des Primärteils ist die Anzahl der Zähne ein ganzzahliges Vielfaches, bevorzugt ein gerädzahliges Vielfaches, von 9.

In einer bevorzugten Ausführungsform weisen die Zähne des Primärteils Polschuhe auf, welche die zwischen den Zähnen liegenden Nuten auf der Seite des Luftspalts des Motors wenigstens teilweise schließen. Dies ergibt einen sinusförmigen Verlauf der induzierten Spannung, was die Streuinduktivität verringert.

Die Gesamtheit obiger Maßnahmen führt zu einem geringen Klirrfaktor.

In einer bevorzugten Ausführungsform weist der Primärteil Hilfszähne auf, die zwischen zwei direkt benachbarten Zähnen angeordnet sind. Hilfszähne steigern im Grundlastbereich das Drehmoment, da mehr Eisen zur Flussführung zur Verfügung steht und somit den Einzelspulen einen kürzeren Flussweg über Eisen (größeres µr als Luft) zur Verfügung steht.

In einer bevorzugten Ausführungsform der Erfindung ist das Verhältnis einer Polteilung des Sekundärteils zu einer Nutteilung des Primärteils gleich 9/8.

Motoren für Servoanwendungen sollen hoch dynamisch positionieren, wofür eine hohe Überlastfähigkeit bei einfacher Regelbarkeit und hoher Linearität notwendig ist. Durch das geringe Sättigungsverhalten der erfindungsgemäßen Drehfeldmaschine ergibt sich eine hohe Linearität und eine hohe Überlastfähigkeit. Die aufgrund der Zahn- und Wicklungskonfiguration des Primärteils erzielte geringe Drehmomentwelligkeit erlaubt eine sehr einfache Positionierung des Sekundärteils. Durch den geringen Klirrfaktor wird ein Regelgerät bei hohen Strömen von rückspeisenden Wellen nur minimal beeinflusst, wodurch sich ferner die Regelgüte der erfindungsgemäßen Drehfeldmaschine weiter erhöht.

Weitere vorteilhafte Ausgestaltung der Erfindung sind in den abhängigen Ansprüchen angegeben.

Bevorzugte Ausführungsformen der Erfindung werden nachfolgend anhand der beigefügten Zeichnung näher erläutert. Es zeigen:
- Fig. 1: eine Ausführungsform eines erfindungsgemäßen Primärteils einer elektrischen Drehfeldmaschine,
- Fig. 2: einen Sekundärteil für den Primärteil aus Fig. 1,
- Fig. 3: eine weitere Ausführungsform eines erfindungsgemäßen Primärteils für die elektrische Drehfeldmaschine,
- Fig. 4: einen Längsschnitt einer Ausführungsform eines erfindungsgemäßen Linearmotors bzw. einen aufgeschnittenen und abgewickelten Querschnitt der Ausführungsform nach Fig. 1,
- Fig. 5: eine Schnittansicht der Fig. 4 durch die Zähne des Primärteils,
- Fig. 6: drei Reihenschaltungen und eine Parallelschaltung von Spulen eines Moduls des Primärteils,
- Fig. 7: ein Anschlussschaltbild der erfindungsgemäßen elektrischen Drehfeldmaschine nach Fig. 1, und
- Fig. 8: die an den Modulzähnen entstehenden magnetischen Polarisierungen zu verschiedenen Zeitpunkten t₀ bis t₁₁ in Verbindung mit einem Dreiphasenstromdiagramm gemäß einer Ausführungsform nach gemäß Fig. 1.

Die folgenden Erläuterungen beziehen sich insbesondere auf einen Synchronmotor, wobei innerhalb eines Stators (Primärteil) des Synchronmotors ein Rotor (Sekundärteil) rotiert. Es sei jedoch darauf hingewiesen, dass die Erfindung ebenfalls Linearmotoren, Asynchronmotoren und auch Generatoren umfassen soll. Ferner ist es möglich, nicht wie bei herkömmlichen Motoren, die für das Drehfeld verantwortlichen Zähne nach innen zeigen zu lassen, sondern nach außen, wodurch entweder der Stator dieses Motors innen liegt, bzw. die Funktion von Stator und Rotor vertauscht sind. Im Folgenden werden die für rotierende Maschinen gebräuchlicheren Ausdrücke Stator bzw. Ständer und Rotor bzw. Läufer verwendet.

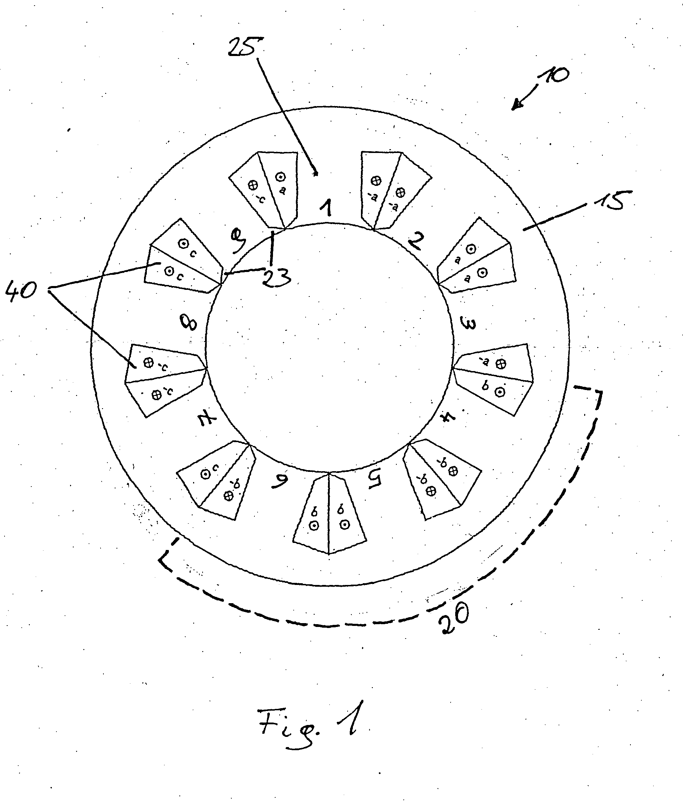

Die Fig. 1 zeigt eine Stirnansicht eines erfindungsgemäßen Stators bzw. Ständers 10 einer erfindungsgemäßen Drehfeldmaschine. In einer solchen Ausführungsform weist der Ständer 10 neun Zähne 25 auf, die über ein Joch 15 miteinander verbunden sind. Das Joch 15 ist zylinderförmig und die neun Zähne 25 stehen mit dem gleichen Winkelabstand zueinander nach innen hervor. Die freien Enden der Zähne 25 bilden einen zylinderförmigen Raum, in welchem ein Rotor bzw. Läufer 100 sich drehen kann. In dieser Ausführungsform sind die Zähne 25 mit Polschuhen 23 versehen, die die verbleibenden Zwischenräume zwischen zwei direkt benachbarten Zähnen am freien Ende der Zähne 25 wenigstens teilweise schließen. Andere Ausführungsformen der Erfindung weisen keine Polschuhe 23 auf.

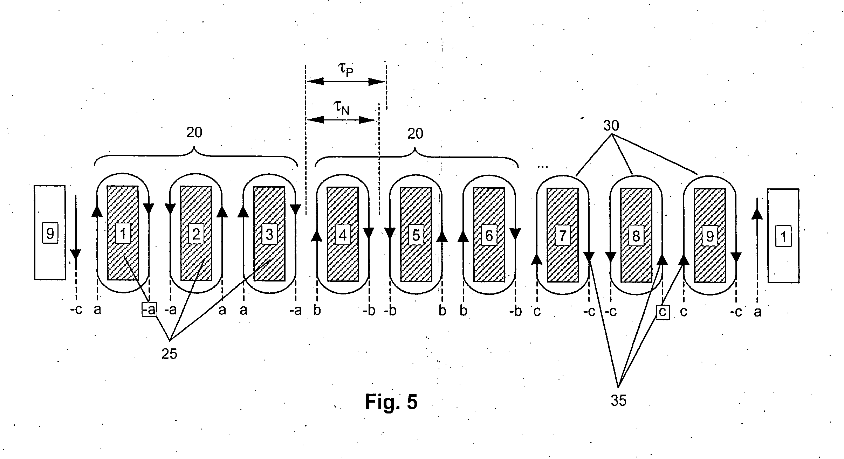

Um jeden Zahn 25 herum ist eine umlaufende Nut 40 vorgesehen (s. Zahn 8, Fig. 1), wobei in jeder dieser umlaufenden Nuten 40 Spulen 30 (s. Fig. 5) vorgesehen sind, die jeweils im Betrieb des Motors ein zeitlich veränderbares Magnetfeld hervorrufen. Drei direkt nebeneinander angeordnete Zähne 25 bilden bei dieser Ausführungsform ein Modul 20, wobei bei dieser Ausführungsform der erfindungsgemäße Ständer 10 der elektrischen Drehfeldmaschine drei Module 20 aufweist, die jeweils die Zähne 1-3, 4-6 und 7-9 umfassen. In anderen Ausführungsformen des erfindungsgemäßen Ständers 10 können jedoch mehr als drei Module pro Ständer 10 vorgesehen sein oder auch jedes Modul 20 mehr als nur drei Zähne 25 aufweisen, wobei bei letzterem die Anzahl der Zähne pro Modul bevorzugt ungerade ist.

In einer bevorzugten Ausführungsform der Erfindung ist der Ständer 10 aus einer Mehrzahl von dünnen, einstückigen ferromagnetischen Stahlblechen (Statorblechen) aufgebaut, die ein wie in Fig. 1 dargestelltes Profil haben. Es ist ebenso möglich den gesamten Ständer 10 oder ein einzelnes Modul 20 einstückig herzustellen bzw. die Module 20 oder die Zähne 25 aus Blechen zusammenzusetzen, um nach einem Bewickeln der Zähne 25 mit Spulen 30 den Ständer 10 zu montieren.

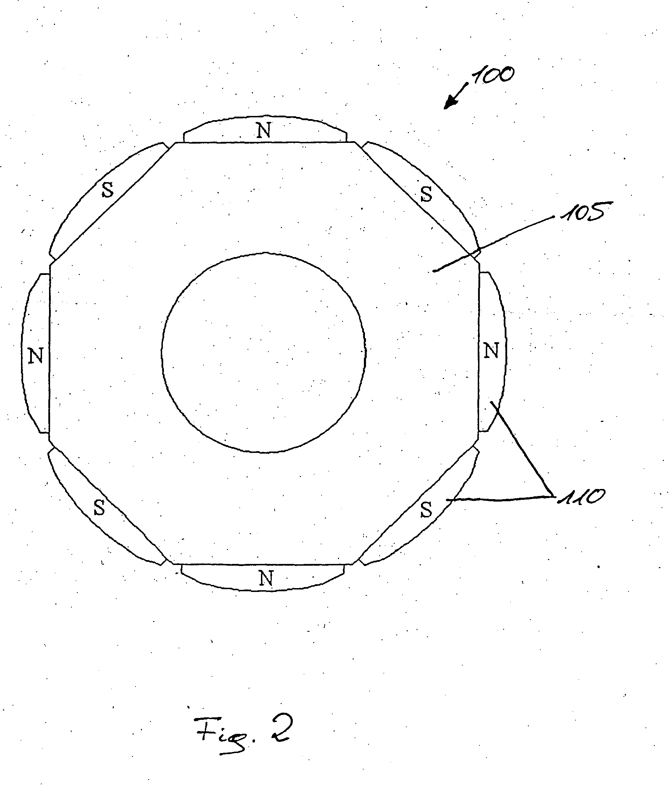

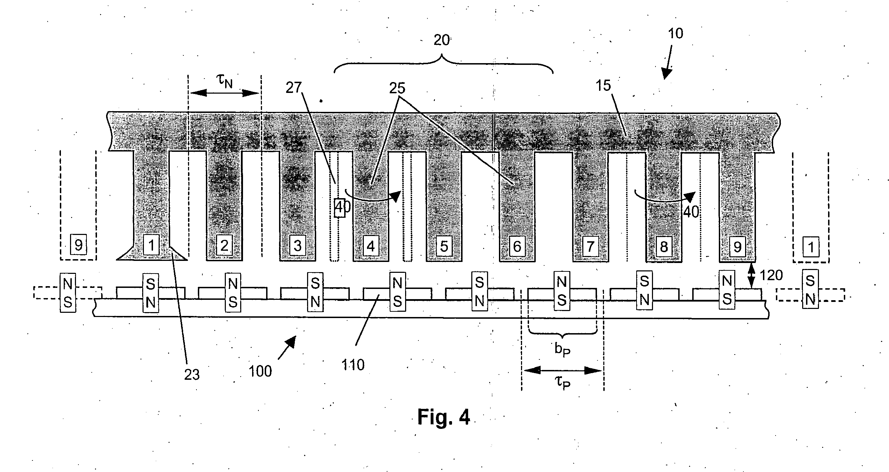

Die Fig. 2 zeigt einen Rotor bzw. Läufer 100 (auch Polrad genannt), welcher im erfindungsgemäßen Ständer 10 drehbar gelagert ist. Für ein störungsfreies Drehen des Läufers 100 im Ständer 10 ist zwischen dem Ständer 10 und dem Läufer 100 ein Luftspalt 120 (siehe Fig. 4) vorgesehen. In einer bevorzugten Ausführungsform der Erfindung weist der Läufer 100 Permanentmagneten als Läufermagneten 110 auf. Diese sind am Umfang des zylinderförmigen Läufers 100 regelmäßig verteilt, wobei die Läufermagneten 110 jeweils außen (und somit auch innen) eine unterschiedliche magnetische Polarisierung aufweisen. Bevorzugt sind die Läufermagneten 110 an einem Schaft 105 vorgesehen, der ebenso wie der Ständer 10 aus ferromagnetischen Stahlblechen aufgebaut ist. Ferner ist es möglich den Schaft 105 einstückig auszulegen oder statt den Permanentmagneten als Läufermagneten 110 Gleichstrommagneten vorzusehen.

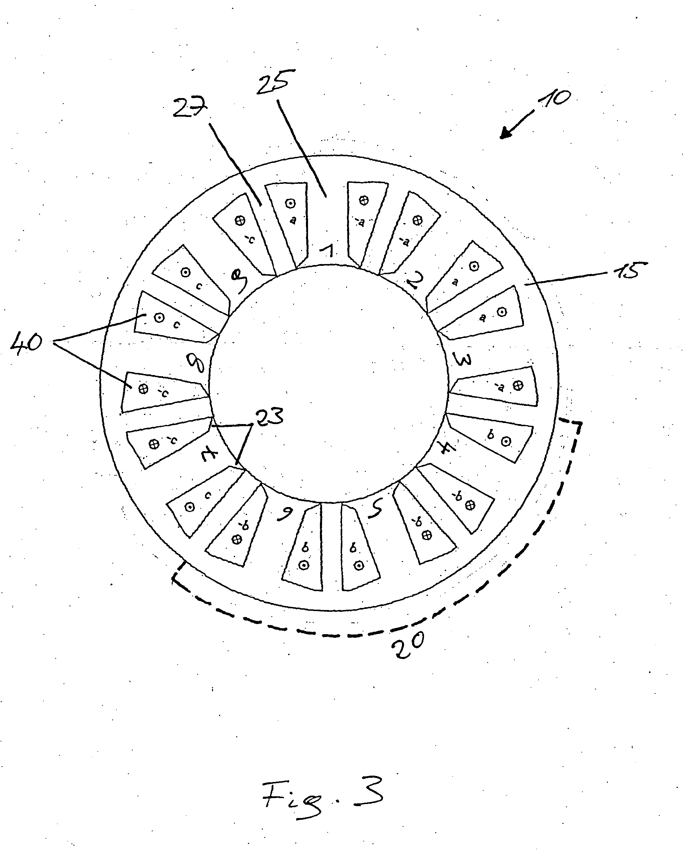

Die Fig. 3 zeigt eine weitere bevorzugte Ausführungsform der Erfindung, bei welcher im Gegensatz zur Ausführungsform gemäß Fig. 1 zwischen zwei direkt benachbarten Zähnen 25 jeweils ein Hilfszahn 27 vorgesehen ist. Diese Ausführungsform ist insbesondere im Bereich niedriger Stromstärken vorteilhaft, da im Grundlastbereich mehr Eisen zur Flussführung zur Verfügung steht.

Die Fig. 4 zeigt einen erfindungsgemäßen Ständer 10 eines Linearmotors bzw. den erfindungsgemäßen Ständer 10 aus Fig. 1 in einer aufgeschnittenen und abgewickelten Darstellung, wobei der Ständer 10 über den Luftspalt 120 mit dem Läufer 100 zusammenwirkt. Der Ständer 10 weist in dieser Ausführungsform drei Module 20 mit jeweils drei Zähnen auf, sodass der Ständer 10 neun Zähne 25 umfasst. Diesen gegenüber liegen acht Läufermagneten 110, die im Betrieb des Motors mit den an den freien Enden der Zähne 25 auftretenden, zeitlich sich verändernden Magnetfeldern des Ständers 10, über den Luftspalt 120 zusammenwirken.

Eine für den Motor maßgebliche Größe ist das Verhältnis von Polteilung τ_{P} zur Nutteilung τ_{N}. Die Polteilung τ_{P} ist ein Maß für die am Umfang des Läufers 100 verteilten Läufermagneten, 110, wobei die Polteilung τ_{P} eine dimensionslose oder dimensionsbehäftete Kennzahl mit der Einheit [m], [°] oder [rad] ist, die den Umfangsplatzbedarf bezogen auf 360° (elektrisch) eines Läufermagnetes 110 am Läufer 100 darstellt. In diesem Ausführungsbeispiel ist die Polteilung τ_{P} in einer dimensionslosen Darstellung τp=1/8. Die Nutteilung τ_{N} ist hingegen ein Maß für den Platzbedarf einer am Umfang des Ständers 10 angeordneten Spule 30, die in einer Nut 40 eines Zahns angeordnet ist. Ähnlich der Polteilung τₚ, gibt die Nutteilung τ_{N} den umfangsbezogenen Platzbedarf einer Spule 30 bzw. einer Nut 40 an. Im vorstehenden. Ausführungsbeispiel beträgt die Nutteilung τ_{N}, ebenfalls in einer dimensionslosen Darstellung, τ_{N} =1/9. Somit beträgt das dimensionslose Verhältnis von Polteilung τₚ zur Nutteilung τ_{N} für eine elektrische Drehfeldmaschine gemäß den vorangegangenen Ausführungsbeispielen τₚ/τ_{N} =9 / 8 .

Allgemein berechnet sich die dimensionslose Polteilung τₚ mit τ_{P}=1/(v'±1) und die dimensionslose Nutteilung τ_{N} mit τ_{N}=1/v', wobei sich das Verhältnis Polteilung τₚ zu Nutteilung τ_{N} mit τ_{P}/τ_{N}=v'/(v'±1) berechnet. Hierbei berechnet sich v' zu v'=n'*m, wobei m die Anzahl der Stromphasen und n' eine natürliche Zahl ist, die die Anzahl der Module 20 im Ständer 10 repräsentiert.

Im Folgenden wird eine bevorzugte Ausführungsform der Erfindung anhand der Fig. 4 und 5 näher erläutert, wobei Fig. 5 die Zähne 25 des Ständers 10 im Querschnitt darstellt und jeder Zahn 25 eine in seiner umlaufenden Nut 40 liegende Spule 30 aufweist. Zum besseren Verständnis ist in den Fig. 4 und 5 jeweils links neben des Zahns 1 der Zahn 9 und jeweils rechts neben des Zahns 9 der Zahn 1 noch einmal schematisch dargestellt. Ebenso ist mit dem entsprechenden Läufermagneten 110 verfahren worden. Dies soll für den Fall eines rotierenden Motors die Umfangsverbindung zwischen Zahn 9 und Zahn 1 bzw. für einen Linearmotor ein sich wiederholendes Muster angeben.

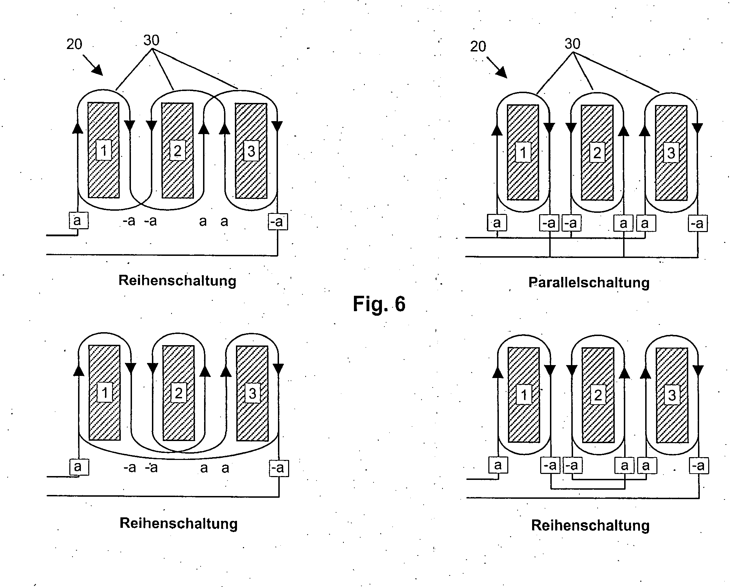

In Fig. 5 ist eine Wicklungsrichtung der Spulen 30 um die Zähne 1-9 des Ständers 10 dargestellt. Hierbei weisen einander direkt benachbarte Spulen 30 jeweils eines einzelnen Moduls 20 eine unterschiedliche Wicklungsausführung 35 auf. So ist z. B. die Spule 30 des Zahns 1 im Urzeigersinn (gemäß der Darstellung in Fig. 5) um diesen herumgewickelt, während die Spule 30 des Zahns 2 entgegen des Uhrzeigersinns um diesen herumgewickelt ist. Zahn 3 wiederum weist eine Spulenwicklung im Uhrzeigersinn auf. Diese drei Spulen 30 des Moduls 20 werden nun an eine einzelne Phase (in diesem Beispiel Stromphase a) eines Drehstroms (in diesem Beispiel einen Dreiphasendrehstrom) angeschlossen. Dies kann z.B. gemäß einer Parallelschaltung bzw. einer der drei Reihenschaltungen aus Fig. 6 geschehen.

Technisch einfach zu realisierende Wicklungsverschaltungen der Spulen 30 sind solche, bei denen jeweils ein Zahn 25 unabhängig von den anderen Zähnen 25 bewickelbar ist. Dies ermögliclit es z.B. vor einer Montage des Ständers 10 die Zähne 25 getrennt voneinander zu bewickeln, was einfach und automatisch geschehen kann. Ein Verschalten der um die Zähne 25 gewickelten Spulen 30 findet dann anschließend bei der Montage des Ständers 10 statt. Solche Ausführüngsförmen sind in der Fig. 6 rechts zu sehen.

Die Spulen 30 der Zähne 1-3 sind nun mit derselben Stromphase a beaufschlagt, wodurch sich aufgrund der unterschiedlichen Wicklungsausführung zweier direkt benachbarter Spulen 30 im Kern (Zahn) der beiden Spulen 30 ein entgegengesetzt polarisiertes Magnetfeld ausbildet. So kann z. B. zu einem Zeitpunkt t die Spule 30 des Zahns 1 am freien Ende dieses Zahns einen Nordpol erzeugen, wohingegen die Spule 30 des Zahns 2 einen Südpol am freien Ende dieses Zahns generiert. Zahn 3 weist dann wiederum an seinem freien Ende aufgrund der Spulenwicklung 35 einen Nordpol auf. Bei einer entgegengesetzten Spannung in Phase a bilden sich dann an den entsprechenden Zähnen 25 dieses Moduls 20 zu obigen Magnetfeldern entgegengesetzte Magnetfeldpolaritäten aus.

Genauso wird mit dem zweiten Modul 20 (Zähne 4-6) des Ständers 10 verfahren, wobei diese Spulen 30 an eine andere Stromphase b des Drehstroms angeschlossen werden. Ebenso wird mit dem dritten Modul 20 (Zähne 7-9) verfahren, die dann an der Stromphase c des Drehstroms liegen.

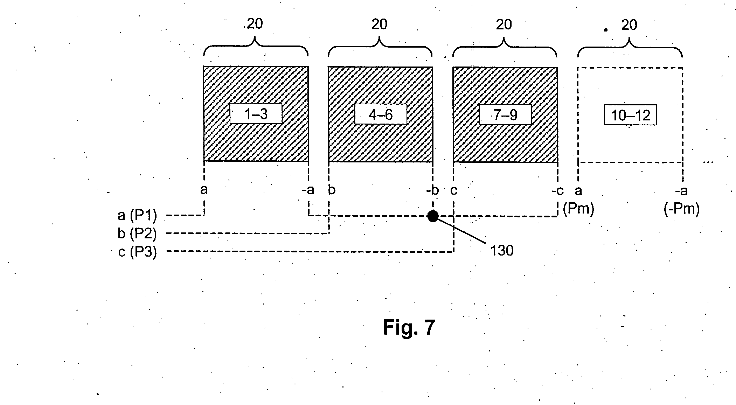

Jedes Modul ist an eine andere Stromphase Pm angeschlossen, wobei Pm die Stromphase (im vorherigen Beispiel a, b und c) darstellt und m die Anzahl der Phasen angibt. Dies ist z. B. in Fig. 7 dargestellt, wobei die Module 20 jeweils als Kasten dargestellt sind. Die elektrische Drehfeidmaschine gemäß einer ersten Ausführungsform mit ihren neun Zähnen 1-9, die sich gleichmäßig auf drei Module 20 aufteilen, sind in Fig. 7 schraffiert dargestellt, wobei das erste Modul (Zähne 1-3) an die Phase P1=a, das zweite Modul (Zähne 4-6) an die Phase P2=b und das dritte Modul 20 (Zähne 7-9) an die dritte Phase P3=c eines Dreiphasenstroms angeschlossen ist und die jeweils letzte Spule 30 des letzten Zahns 25 eines Moduls 40 (Zähne 3, 6 und 9) an einen Sternpunkt 130 einer Sternschaltung angeschlossen ist. Ferner sind in Fig. 7 weitere Module 20 angedeutet (gestrichelter Kasten), welche andere Ausführungsformen der Erfindung mit dreizähnigen Modulen 20 realisieren, jedoch eine andere Anzahl von Stromphasen aufweisen.

Gemäß der Erfindung ist es möglich entweder das vorhergehende Muster gemäß Fig. 7 der drei Module 20 zu wiederholen und diese wiederum jeweils an die Stromphasen a, b und c des Dreiphasenstroms anzuschließen (geeignet für einen Linearmotor) oder man beschaltet die weiteren Module 20 mit weiteren Stromphasen eines Mehrphasenstroms. Hat man nun einen Vierphasenstrom, so sollte die elektrische Drehfeldmaschine wenigstens- vier Module 20 oder ein ganzzahliges Vielfaches davon aufweisen, wobei wiederum jedes einzelrie der Module 20 an eine Stromphase Pm angeschlossen ist. Ferner ist es ebenso möglich, dass ein einzelnes Modul 20 nicht nur drei Zähne 25 aufweist, sondern vier oder mehr. Ein Motor mit solchen Modulen 20, kann ebenso gemäß der Erfindung in obigen Varianten an ein Drehstromnetz angeschlossen werden. Bevorzugt für die Erfindung sind Module 20 mit einer ungeradzahligen Anzahl von Zähnen 25, jedoch einer geradzahligen Anzahl von Zähnen 25 im Stator 10 insgesamt. Dies ist z. B. bei einer Zähneanzahl von drei je Modul und einer Modulanzahl von sechs gegeben. Vorteilhaft bei einer solchen Ausführungsform ist dann ein Drehstrom mit drei Phasen, wobei jeweils eine Phase an zwei Modulen 20 anliegt.

In Fig. 5 ist für eine vereinfachte Darstellung der Wicklungsausführung 35, einer Spule 30 um einen Zahn 25 die Wicklungsrichtung mit Plus (+) und Minus (-) vor der an die Spule 30 angeschlossenen Stromphase a, b, c dargestellt. Bei der Wicklungsausführung 35 einer Spule 30 ist es nur ausschlaggebend, wie die Wicklungen der Spulen 30 relativ zueinander ausgeführt sirid. Daher kann eine Nomenklatur willkürlich gewählt sein, solange sie für unterschiedliche Wicklungsausführungen 35 (Uhrzeiger-/Gegenugrzigersinn) unterschiedliche Bezeichnungen verwendet. Gemäß Fig. 5 bedeutet ein positives Vorzeichen, dass der Spulendraht (immer gemäß Fig. 5) von unten nach oben (wie der entsprechende Pfeil darstellt) geführt wird, während ein negatives Vorzeichen bedeutet, dass der Spulendraht von oben nach unten geführt wird.

Die Stroinphasen eines Drehstroms sind sinusförmig und weisen eine grundlegende Frequenzkomponente cos (ω·t-α) auf, wobei jede Drehstromphase Pm mit einer Geschwindigkeit w [rad/s] rotiert und jede Drehstromphase Pm von der nächsten um einen Winkel α verschoben ist, der z. B. bei einem Dreiphasendrehstrom 120° oder 2π/3 rad beträgt. Für das beispielhafte Dreiphasennetz bedeutet dies für Strom und Spannung für einen beliebigen Zeitpunkt t, dass sich die Phase a gemäß cos (ω·t), die Phase b gemäß cos(ω·t-2π/3) und die Phase c gemäß cos (ω·t-4π/3) verhält. Diese Phasenströme Pm laufen durch die jeweilige Spulenwicklung 35 und erzeugen einen magnetischen Fluss im Ständer 10 der im Wesentlichen senkrecht auf den Luftspalt 120 trifft, der zwischen dem Ständer 10 und dem Läufer 100 vorgesehen ist. Das sich aufgrund des zeitlich veränderbaren Stroms sich ebenfalls zeitlich ändernde Magnetfeld wirkt mit den Läufermagneten 110 derart zusammen, dass sich der Läufer 100 dreht (bei einem Linearmotor linear fortbewegt) und ein Drehmoment abgibt (bzw. den Läufer mit einer Kraft linear fortbewegt). Idealerweise ist hierbei das Magnetfeld des Läufers um 90° phasenversetzt zum dynamischen Magnetfeld des Stators 10, was zu einem maximalen Kraftübertrag führt.

Aufgrund der Ständergeometrie 10 und der erfindungsgemäßen Wicklungsausführung 35 existiert bei den durch das Drehfeld generierten Oberwellen erst bei einer hohen Ordnungszahl und somit bei einer kleinen Amplitude eine kongruente Oberwelle des Rotorfeldes. Diese unerwünschten Kräfte auf den Läufer 100 sind wegen der kleinen Amplitude der Oberwellen gering, was die Drehmomentwelligkeit des Motors stark herabsetzt.

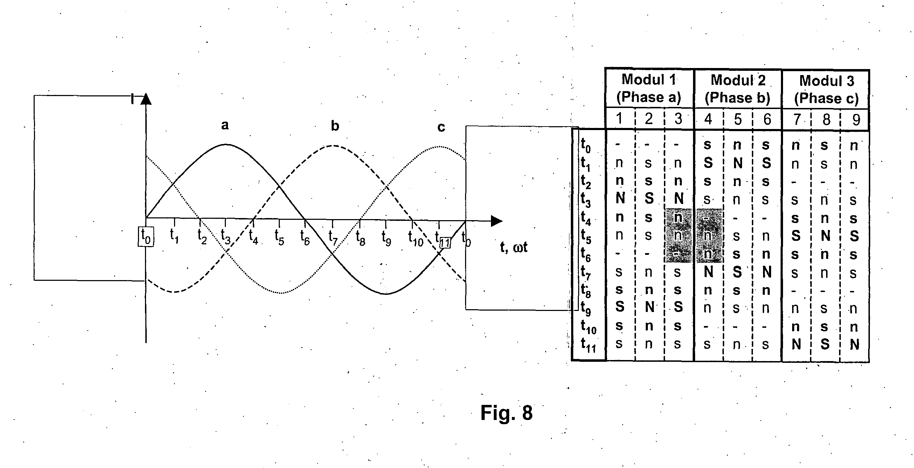

Für ein besseres Verständnis des sich im Ständer 10 ausbildenden, zeitlich sich verändernden Magnetfelds wird die Fig. 8 betrachtet. Fig. 8 stellt im linken Teil das Phasendiagramm eines Dreiphasenstroms mit den Stromphasen a, b und c dar, die jeweils gegeneinander um 120° versetzt sind. Beispielhaft ist hier wiederum ein Dreiphasenstrom dargestellt, wobei ein anderer Mehrphasenstrom ebenso möglich ist. Rechts daneben ist tabellarisch die magnetische Polarisierung der einzelnen Zähne 25 der drei Module 20 dargestellt.

Zu einem Zeitpunkt t₀ liegen an einem ersten Modul 20 (Zähne 1-3) weder Strom noch Spannung an, sodass kein Mägnetfeld von den Spulen 30 hervorgerufen wird. Am zweiten Modul 20 (Zähne 4-6) liegt zum Zeitpunkt t₀ eine negative Spannung an, die dann aufgrund einer Wicklungsausführung 35 der Spulen 30 dieses Moduls 20 an Zahn 4 einen Süd-, an Zahn 5 einen Nord- und an Zahn 6 wiederum einen Südpol hervorruft, wobei aufgrund dessen, dass der Strom seinen Maximalwert noch nicht erreicht hat, die Pole noch nicht vollständig ausgebildet sind (das erfolgt für das zweite Modul erst bei t₁). Am dritten Modul (Zähne 7-9) hingegen, liegt zum Zeitpunkt t₀ eine positive Spannung an, was an Zahn 7 einen Nord-, an Zahn 8 einen Süd- und an Zahn 9 wiederum einem Nordpol erzeugt, die ebenso, wie bei Modul 2 noch nicht ihren Maximalwert erreicht haben.

Zum Zeitpunkt t₁ haben alle Spannungen und somit auch alle Ströme der Phasen a, b und c einen von 0 verschiedenen Wert, sodass sich an jedem der neun Zähne ein mehr oder etwas weniger starkes Magnetfeld ausprägt, welches an der Zeile t₁ in der Tabelle der Fig. 8 ablesbar ist. Hierbei bilden sich an den Zähnen 1-3 des ersten Moduls ein schwacher Nord-, ein schwacher Süd- und wiederum ein schwacher Nordpol aus, wohingegen sich an den Zähnen 4-6 des zweiten Moduls ein maximaler Süd-, ein maximaler Nord- und wiederum ein maximaler Südpol ausbildet und sich an den Zähnen 7-9 des dritten Moduls ein schwacher Nord-, ein schwacher Süd- und wiederum ein schwacher Nordpol ausbildet. Hierbei ist zu sehen, dass sich am Zahn 1 sowie am Zahn 9 jeweils ein Nordpol ausbildet, die in der Synchronmaschine nebeneinander liegen und als ein Nordpol wirken, sodass der erfindungsgemäße Ständer 10 zum Zeitpunkt t₁ acht Pole ausbildet. Diesen acht Polen liegen nun die acht Läufermagneten 110 des Läufers 100 gegenüber.

Diese Konfiguration mit acht Polen im Ständer 10 bildet sich zu jedem Zeitpunkt t des Betriebs des Motors, bis auf die entsprechenden Nulldurchgänge der Stromphasen, aus. So bildet sich zum Zeitpunkt t₃ an Zahn 6 und Zahn 7 ein gemeinsamer Südpol, zum Zeitpunkt t₅ an Zahn 3 und Zahn 4 ein gemeinsamer Nordpol, zum Zeitpunkt t₇ an Zahn 1 und Zahn 9 ein gemeinsamer Südpol, zum Zeitpunkt t₉ an Zahn 6 und Zahn 7 ein gemeinsamer Nordpol und zum Zeitpunkt t₁₁ an Zahn 3 und Zahn 4 ein gemeinsamer Südpol aus. Insbesondere von Vorteil ist eine elektrische Drehfeldmaschine deren Ständer 10 ein geradzahliges Vielfaches von neun Zähnen 25, so z. B. 18 oder 36 Zähne 25 aufweist. Bei einer solchen Ausführungsform liegen diese entstehenden "Doppelpole" einander diametral gegenüber, wodurch diese geometrische Unregelmäßigkeit komperisiert werden kann. Ferner sind z. B. Ausführungsformen der Erfindung bevorzugt, die fünf Zähne 25 je Modul 20 aufweisen, wobei z. B. 30 Zähne 25 im erfindungsgemäßen Ständer 100 vorgesehen sind.

Um eine ungefähre Vorstellung der Stärke der Magnetfelder in der Tabelle der Fig. 8 zu geben, sind schwache Magnetfelder mit Kleinbuchstaben, etwas stärkere Magnetfelder in fetten Kleinbuchstaben und das maximale Magnetfeld eines jeden Zahns 25 in fetten Großbuchstaben angegeben.

Ferner ist zu beachten, dass sich immer nur "Doppelpole" ausbilden, die aus schwachen gleichartigen Magnetfeldpolaritäten resultieren, was exemplarisch in der Tabelle in der Fig. 8 mit dem grauen Kasten einmal dargestellt ist. Zu allen anderen Zeitpunkten bilden sich ebenfalls nur solche schwachen "Doppelpole" aus, wodurch die geometrische Unsymmetrie nicht stark ins Gewicht fällt.,

### Bezugszeichealiste,

- P: (Dreh-)Stromphase, allgemein
- m: Anzahl der Stromphasen
- a: Stromphase (eines Dreiphasenstroms)-
- b: Stromphase (eines Dreiphasenstroms)
- c: Stromphase (eines Dreiphasenstroms)
- n: natürliche Zahl
- n': natürliche Zahl
- v': [=n'*m]
- b_{P}: Magnetbreite (Polbedeckung)

- τ_{N}: Nutteilung [= 1/v']
- τ_{P}: Polteilung [= 1/(v'±1)]

- 1-9: Zahn
- 10: Primärteil, Ständer (Stator)
- 15: Joch
- 20: Modul
- 23: Polschuh
- 25: Zahn (allgemein)
- 27: Hilfszahn
- 30_{.}: Spule
- 35: Wicklungsausführung, Spulenwicklung
- 40: Nut

- 100: Sekundärteil, Läufer (Rotor)
- 105: Schaft
- 110: Läufermagnet (bevorzugt Permanentmagnet)
- 120: Luftspalt
- 130: Sternpunkt

## Patentansprüche

1. Primärteil einer elektrischen Drehfeldmaschine, insbesondere eines Synchron- oder Linearmotors,
mit einer Mehrzahl von Modulen (20), die jeweils in einer Reihe angeordnete Zähne (25) mit wenigstens teilweise umlaufenden Nuten (40) aufweisen, wobei
in der Nut (40) eines jeden Zahns (25) eine Spule (30) um diesen Zahn (25) gewickelt ist und die Spulen (30) eines einzelnen Moduls (20) an eine einzelne Phase (Pm) eines Drehstromnetzes angeschlossen sind, und
die Anzahl der Module (20) im Primärteil (10) gleich der Anzahl der Stromphasen (Pm) oder ein ganzzahliges Vielfaches davon ist, **dadurch gekennzeichnet, dass**
ein einzelnes Modul (20) eine ungerade Anzahl von Zähnen (25), jedoch wenigstens drei Zähne (25), umfasst und dass
einander direkt benachbarte Zähne (25) eines einzelnen Moduls (20) Spulen (30) mit einer gegensinnigen Wicklungsrichtung aufweisen, die an den Zähnen (25) eine entgegengesetzte Magnetfeldpolarität hervorruft.

2. Primärteil gemäß Anspruch 1, **dadurch gekennzeichnet, dass** einander direkt benachbarte Zähne (25) zweier direkt benachbarter Module (20), Spulen (30) aufweisen, die eine gleichsinnige Wicklungsrichtung aufweisen.

3. Primärteil gemäß Anspruch 1 oder 2, **dadurch gekennzeichnet, dass** sich eine dimensionslose Nutteilung (*τ*_{N}) des Primärteils (10) nach der Formel τ_{N} = 1/v' berechnet, wobei v' = n'*m ist, und wobei m die Anzahl von Stromphasen (Pm) und n' eine natürliche Zahl ist.

4. Primärteil gemäß einem der Ansprüche 1 bis 3, **dadurch gekennzeichnet, dass** eine Wicklungsausführung (35) des Primärteils (10): (P1/-P1), [(-P1/P1), (P1/-P1)]_{n-fach}; ...; (Pm/-Pm), [(-Pm/Pm), (Pm/ -Pm)]_{n-fach} oder ein ganzzahliges Vielfaches davon bzw. ein zu diesen elektromagnetisch invariantes Äquivalent ist, wobei n eine natürliche Zahl ist.

5. Primärteil gemäß einem der Ansprüche 1 bis 4, **dadurch gekennzeichnet, dass** die Wicklungsausführung (35) des Primärteils (10): (a/-a), (-a/a), (a/-a); (b/-b), (-b/b), (b/-b); (c/-c), (-c/c), (c/-c) oder ein ganzzahliges Vielfaches davon bzw. ein zu diesen elektromagnetisch invariantes Äquivalent ist.

6. Primärteil gemäß einem der Ansprüche 1 bis 5, **dadurch gekennzeichnet, dass** die Anzahl der Zähne (25) des Primärteils (10) ein beliebiges ganzzahliges Vielfaches, bevorzugt ein geradzahliges Vielfaches, von neun oder fünfzehn ist.

7. Primärteil gemäß einem der Ansprüche 1 bis 6, **dadurch gekennzeichnet, dass** jeweils zwischen zwei direkt benachbarten Zähnen (25) des Primärteils (10) ein Hilfszahn (27) angeordnet ist.

8. Primärteil gemäß einem der Ansprüche 1 bis 7, **dadurch gekennzeichnet, dass** die Nuten -(40) im Bereich des freien Endes der Zähne (25) mittels Polschuhen (23) wenigstens teilweise geschlossen sind.

9. Elektrische Drehfeldmaschine, insbesondere Synchron- oder Linearmotor, mit einem Primärteil (10) gemäß einem der vorhergehenden Ansprüche und ferner mit einem mit dem Primärteil (10) über einen Luftspalt (120) zusammenwirkenden Sekundärteil (100), der als Läufermagrieten (110) bevorzugt Permanentmagneten aufweist.

10. Drehfeldmaschine gemäß Anspruch 9, **dadurch gekennzeichnet, dass** das Verhältnis der Polteilung (τ_{P}) des Sekundärteils (100) zur Nutteilung (τ_{N}) des Primärteils (10) τ_{P}/τ_{N} v' (v'±1) ist.

11. Drehfeldmaschine gemäß Anspruch 9 oder.10, **dadurch gekennzeichnet, dass** das Verhältnis der Polteilung (τ_{P}) zur Nutteilung (τ_{N}) τ_{P}/τ_{N} = 9/8 ist.

12. Drehfeldmaschine gemäß einem der Ansprüche 9 bis 11, **dadurch gekennzeichnet, dass** die Anzahl der elektrischen Phasen P gleich drei ist.
